# FASCICULE DE BREVET EUROPEEN

(11) **EP 1 245 436 B1**
(45) Date de publication et mention de la délivrance du brevet: **10.05.2006**
(21) Numéro de dépôt: 02290791.9
(22) Date de dépôt: 28.03.2002
(51) Int. Cl.: B60N 2/24, B60N 2/30

(54) **Ensemble de siège pour véhicule de transport en commun**
Sitzeinrichtung für öffentlichen Verkehrfahrzeug
Seat assembly for public transportation vehicle

(30) Priorité: 29.03.2001 FR 0104289
(43) Date de publication de la demande: 02.10.2002
(73) Titulaire: Régie Autonome des Transports Parisiens, 75599 Paris Cedex 12 (FR); Compin, 75017 Paris (FR)
(72) Inventeur: Bourillet, Alain, 77170 Brie Comte Robert (FR); Jaouen, Patrick, 27370 Saint Pierre de Bosc Guerard (FR)
(74) Mandataire: Jacobson, Claude

(56) Documents cités:
- EP-A- 0 631 902
- EP-A- 0 704 340
- US-A- 4 118 062
- PATENT ABSTRACTS OF JAPAN vol. 017, no. 472 (M-1470), 27 août 1993 (1993-08-27) -& JP 05 112168 A (DAIHATSU MOTOR CO LTD), 7 mai 1993 (1993-05-07)

## Description

La présente invention concerne un ensemble de siège pour véhicule de transport en commun.

Les ensembles de sièges utilisés jusqu'à présent dans les véhicules de transport en commun, sont par exemple fixés par l'intermédiaire de moyens de vissage sur ce véhicule et en particulier sur le plancher de celui-ci ou une cloison ou une paroi quelconque de celui-ci.

On conçoit que ceci présente un certain nombre d'inconvénients au niveau de l'aménagement intérieur de ce véhicule.

En effet, une modification de cet aménagement nécessite un démontage et un remontage complets des ensembles de sièges, opérations relativement complexes, fastidieuses et longues et nécessitant du personnel qualifié.

On connaît également par exemple du document EP-A-0 704 340, un ensemble de siège de véhicule conforme au préambule de la revendication 1.

Cependant, cet ensemble de siège présente une structure difficile à intégrer dans un véhicule de transport en commun en raison de sa manipulation difficile.

Le but de l'invention est de résoudre ces problèmes.

A cet effet, l'invention a pour objet un ensemble de siège de véhicule de transport en commun, comportant au moins deux sièges comprenant des portions formant dossier et des portions formant assise articulées sur les portions formant dossier pour pouvoir être rabattues contre celles-ci, caractérisé en ce qu'il comporte à ses extrémités, deux bords latéraux dont l'un est articulé sur une paroi latérale de la structure du véhicule, de manière qu'il soit déplacable angulairement entre une première position le long de cette paroi du véhicule et une seconde position dans laquelle il s'étend à peu près perpendiculairement à cette paroi et en ce que l'autre bord latéral de cet ensemble comporte des moyens de verrouillage en positions de celui-ci, comportant des moyens formant ventouse électromagnétique comprenant un électroaimant dont l'alimentation est commandée pour assurer le blocage en position de l'ensemble de siège et associés à des moyens de verrouillage mécanique à doigt de butée sollicités en position active de verrouillage par des moyens élastiques et associés à un électroaimant dont l'alimentation est commandée pour assurer la rétraction de ce doigt et permettre le déplacement de l'ensemble de siège.

L'invention sera mieux comprise à la lecture de la description qui va suivre, donnée uniquement à titre d'exemple et faite en se référant aux dessins annexés, sur lesquels :
- la Fig.1 représente un intérieur de véhicule de transport en commun muni d'un ensemble de siège selon l'invention, dans une première position le long d'une paroi de ce véhicule ;
- la Fig.2 représente une figure analogue à la figure 1, dans laquelle l'ensemble de siège est illustré dans une seconde position ;
- la Fig.3 représente des moyens de verrouillage prévus sur un bord latéral d'un ensemble de siège selon l'invention ; et
- la Fig.4 représente un schéma synoptique illustrant la structure et le fonctionnement de ces moyens de verrouillage.

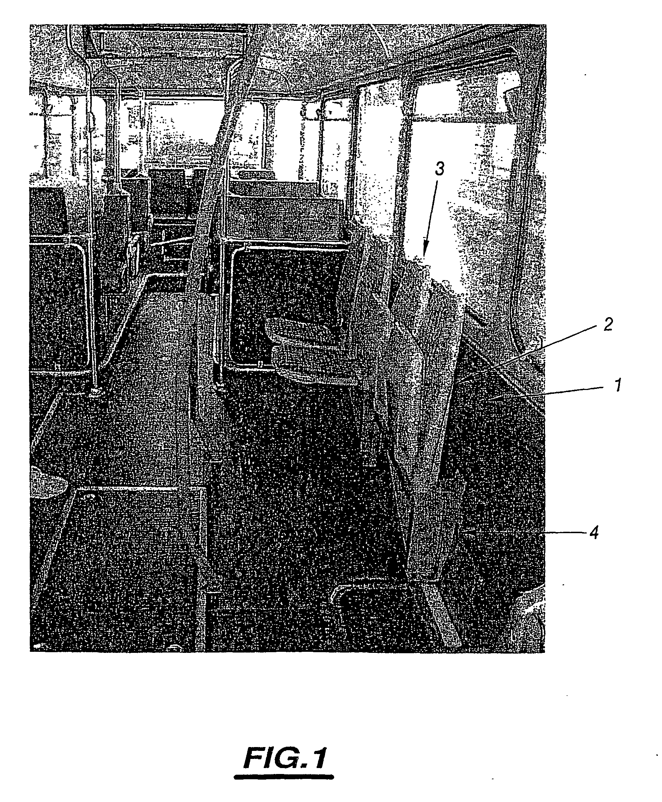

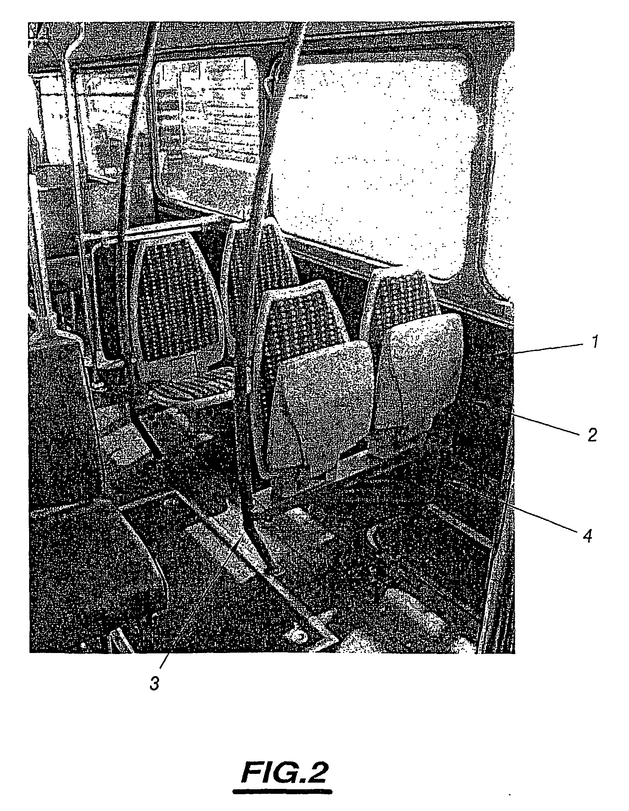

On a en effet représenté sur ces figures 1 et 2, un ensemble de siège pour véhicule de transport en commun.

L'ensemble de siège représenté comporte deux sièges.

Il va de soi bien entendu qu'un nombre différent de sièges peut être envisagé.

De façon générale, l'un de ces ensembles de siège est désigné par la référence générale 1 sur ces figures et présente des bords latéraux respectivement 2,3, dont l'un 2 est muni de moyens d'articulation sur la structure du véhicule, ces moyens d'articulation étant désignés par la référence générale 4.

Ces moyens d'articulation présentent n'importe quelle structure appropriée et permettent de fixer l'ensemble de siège de façon articulée, par exemple sur une paroi latérale du véhicule ou encore sur le plancher de celui-ci.

On conçoit alors que cet ensemble de siège est monté déplaçable angulairement entre une première position illustrée sur la figure 1, dans laquelle l'ensemble de siège s'étend par exemple le long d'une paroi latérale du véhicule et une seconde position illustrée sur la figure 2, dans laquelle cet ensemble de siège s'étend à peu près perpendiculairement à cette paroi latérale.

Il va de soi bien entendu que d'autres dispositions peuvent être envisagées et que l'ensemble de siège peut être associé à une autre paroi ou à une autre cloison du véhicule.

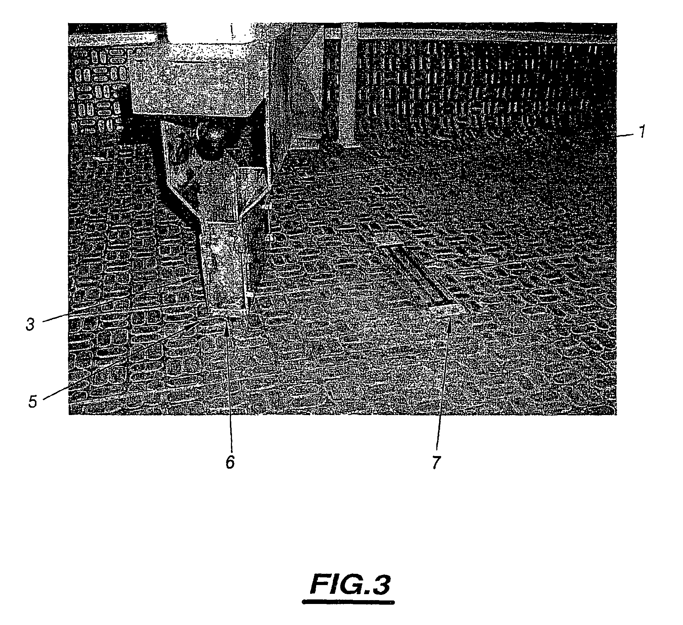

L'autre bord latéral de l'ensemble de siège, c'est-à-dire le bord 3 opposé à celui 2 articulé sur le véhicule, est muni de moyens de verrouillage en positions de cet ensemble, ces moyens de verrouillage étant désignés par la référence générale 5 sur la figure 3.

En fait, ces moyens de verrouillage peuvent comporter deux parties complémentaires dont l'une est portée par l'ensemble de siège et est désignée par la référence générale 6 et dont l'autre est par exemple associée au plancher du véhicule et est désignée par la référence générale 7.

Ces moyens de verrouillage comportent des moyens formant ventouse électromagnétique dont une partie est associée à l'ensemble de siège et dont l'autre partie est associée au véhicule et plus particulièrement par exemple au plancher de celui-ci.

Cette ventouse comporte un électroaimant dont l'alimentation en énergie électrique est assurée par exemple à partir d'une source d'énergie embarquée à bord du véhicule formée par exemple par la batterie du véhicule, lorsque l'ensemble de siège est dans l'une de ses positions pour assurer son blocage dans celle-ci

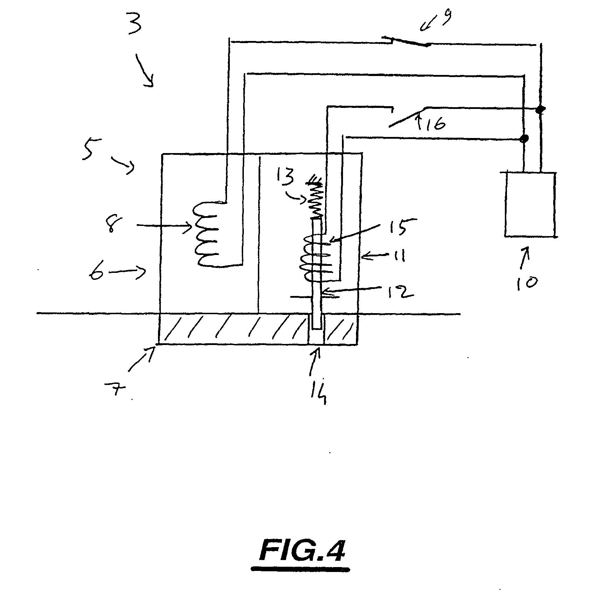

Ces moyens formant ventouse électromagnétique sont également associés à des moyens de verrouillage mécanique positif comme cela est illustré par exemple sur la figure 4.

On reconnaît en effet sur cette figure 4, la partie 6 des moyens formant ventouse électromagnétique associée à l'ensemble de siège, qui est, sur cette figure, en regard de la partie 7 associée au plancher du véhicule.

Cette partie 7 est une pièce en matériau magnétique, par exemple intégrée dans le plancher du véhicule et la partie 6 des moyens formant ventouse électromagnétique comporte par exemple un électroaimant schématisé par la référence 8 sur cette figure, dont l'alimentation est assurée à travers un commutateur quelconque 9 à partir de la source d'énergie électrique 10 du véhicule.

Ces moyens électromagnétiques sont accouplés à des moyens de verrouillage mécanique positif désignés par la référence générale 11 sur cette figure 4.

Ces moyens comprennent un doigt de verrouillage désigné par la référence générale 12, sollicité en saillie, par des moyens élastiques 13, de préférence dans un évidement correspondant 14 par exemple de la partie 7 associée au plancher du véhicule pour assurer une sécurité du blocage en position de l'ensemble de siège.

Ce doigt est également associé à un électroaimant désigné par la référence générale 15 dont l'alimentation est assurée à travers un commutateur 16 par la source d'énergie électrique 10 du véhicule.

Le commutateur 9 est un commutateur à fermeture, tandis que le commutateur 16 est un commutateur à ouverture.

Ces commutateurs peuvent par exemple être actionnables par un machiniste ou encore être associés à des contacts de fin de course, intégrés par exemple dans les moyens d'articulation de l'ensemble de siège sur le véhicule permettant de commander leur alimentation ou la coupure de leur alimentation en fonction de la position de l'ensemble de siège.

Lorsque l'élément de siège est par exemple dans sa seconde position, les deux parties 6 et 7 des moyens formant ventouse électromagnétique, sont en regard l'une de l'autre.

Le commutateur 9 est alors fermé, déclenchant l'alimentation de l'électroaimant 8 et le plaquage et l'immobilisation de la partie 6 contre la partie 7 de ces moyens pour bloquer l'ensemble de siège en position.

Dans le même temps, le commutateur 16 est ouvert, de sorte que l'électroaimant 15 n'est pas alimenté et que les moyens élastiques 13 constitués par exemple par un ressort hélicoïdal, sollicitent le doigt de butée 12 en position active dans l'évidemment 14 de la partie 7 pour assurer le verrouillage mécanique positif en position de l'ensemble de siège.

Ceci permet d'éviter tout problème de sécurité en cas de coupure de l'alimentation en énergie due par exemple à une défaillance de la batterie du véhicule.

Lorsqu'un machiniste souhaite déplacer l'ensemble de siège, il manceuvre les commutateurs 9 et 16 pour ouvrir le commutateur 9 et fermer le commutateur 16, déclenchant ainsi la coupure de l'alimentation de l'électroaimant 8 pour arrêter le fonctionnement de la ventouse électromagnétique et alimenter l'électroaimant 15 pour provoquer la rétractation du doigt 12 hors de l'évidemment 14, et donc la libération de l'ensemble de siège qui peut alors être déplacé vers son autre position, par exemple par le machiniste.

Il va de soi bien entendu que des moyens de motorisation des déplacements de l'ensemble de siège entre ses positions peuvent être envisagés et également pilotés par le machiniste, par exemple depuis le poste de conduite du véhicule.

On conçoit qu'une telle structure est extrêmement fiable et peu sujette à dégradation dans la mesure où la partie 7 de la ventouse électromagnétique associée au plancher du véhicule est pratiquement indestructible et fonctionne même en cas de rayures, etc...

L'association de cette ventouse électromagnétique et des moyens mécaniques à doigt de butée permet d'assurer une sécurité parfaite d'immobilisation de l'ensemble en positions.

On conçoit alors qu'une telle structure d'ensemble de siège présente un certain nombre d'avantages notamment au niveau des possibilités d'aménagement de l'intérieur du véhicule, car les sièges peuvent, par exemple en fonction de l'occupation du véhicule, être placés très facilement dans telle ou telle position.

Dans l'exemple décrit, l'ensemble de siège comporte des portions formant assise et des portions formant dossier, les portions formant assise étant articulées sur les portions formant dossier, et étant sollicitées élastiquement en position rabattue contre ceux-ci.

Cette structure est communément appelée strapontin et permet encore d'améliorer l'habitabilité du véhicule.

Il va de soi bien entendu que d'autres modes de réalisation encore de cet ensemble de siège peuvent être envisagés.

## Revendications

1. Ensemble de siège de véhicule de transport en commun, comportant au moins deux sièges comprenant des portions formant dossier et des portions formant assise articulées sur les portions formant dossier pour pouvoir être rabattues contre celles-ci, **caractérisé en ce qu'**il comporte à ses extrémités, deux bords latéraux (2,3) dont l'un (2) est articulé (en 4) sur une paroi latérale de la structure du véhicule, de manière qu'il soit déplaçable angulairement entre une première position le long de cette paroi du véhicule et une seconde position dans laquelle il s'étend à peu près perpendiculairement à cette paroi et **en ce que** l'autre bord latéral (3) de cet ensemble comporte des moyens (5) de verrouillage en positions de celui-ci, comportant des moyens formant ventouse électromagnétique (6,7) comprenant un électroaimant (8) dont l'alimentation est commandée pour assurer le blocage en position de l'ensemble de siège et associés à des moyens (11) de verrouillage mécanique à doigt de butée (12) sollicités en position active de verrouillage par des moyens élastiques (13) et associés à un électroaimant (15) dont l'alimentation est commandée pour assurer la rétraction de ce doigt et permettre le déplacement de l'ensemble de siège.

2. Ensemble de siège selon la revendication 1, **caractérisé en ce que** les moyens de verrouillage comportent une première partie (6) portée par l'ensemble de siège et une seconde partie (7) associée au plancher du véhicule.

3. Ensemble de siège selon la revendication 2, **caractérisé en ce que** la seconde partie (7) associée au plancher du véhicule est réalisée en matériau magnétique et comporte un évidement (14) de réception en position active de verrouillage du doigt de butée (12).

4. Ensemble de siège selon la revendication 3, **caractérisé en ce que** l'alimentation en énergie des électroaimants (8,15) est assurée par une batterie du véhicule.

## Patentansprüche

1. Sitzeinrichtung für ein öffentliches Transportfahrzeug, welches zumindest zwei Sitze mit Abschnitten, die eine Rückenlehne bilden, und mit Abschnitten, die Sitzplatten bilden, aufweist, welche an den Rückenlehnen bildenden Abschnitten gelenkig angebracht sind, um gegen diese umklappbar zu sein, **dadurch gekennzeichnet, dass** sie an ihren Enden zwei Seitenränder (2, 3) aufweist, von denen der eine (2) gelenkig (in 4) an einer Seitenwand des Fahrzeugaufbaus auf solche Weise angebracht ist, dass er zwischen einer ersten Position längs dieser Wand des Fahrzeugs und einer zweiten Position winklig verstellbar ist, in welcher er sich ungefähr rechtwinklig zu dieser Wand erstreckt, und dass der andere Seitenrand (3) dieser Einrichtung Mittel (5) zur Verriegelung in Positionen von dieser aufweist, welche mit Mittel (6, 7) versehen sind, die elektromagnetische Saugnäpfe mit einem Elektromagnet (8) bilden, dessen Versorgung zur Sicherstellung der Positionsverriegelung der Sitzeinrichtung steuerbar ist, und mit mechanischen Verriegelungsmitteln (11) mit Anschlagzapfen (12) in Verbindung stehen, welche in aktiver Verriegelungsstellung durch elastische Mittel (13) beaufschlagt sind, und mit einem Elektromagnet (15) in Verbindung stehen, dessen Versorgung zur Sicherstellung des Zurückziehens dieses Zapfens und zur Ermöglichung der Verstellung der Sitzeinrichtung steuerbar ist.

2. Sitzeinrichtung nach Anspruch 1, **dadurch gekennzeichnet, dass** die Mittel zur Verriegelung einen ersten Abschnitt (6), der von der Sitzeinrichtung getragen ist, und einen zweiten Abschnitt (7), welcher mit dem Fußboden des Fahrzeugs verbunden ist, aufweisen.

3. Sitzeinrichtung nach Anspruch 2, **dadurch gekennzeichnet, dass** der zweite Abschnitt (7), der mit dem Fußboden des Fahrzeugs verbunden ist, aus einem magnetischen Werkstoff hergestellt ist und eine Ausnehmung (14) zur Aufnahme in aktiver Verriegelungsstellung des Anschlagzapfens (12) aufweist.

4. Sitzeinrichtung nach Anspruch 3, **dadurch gekennzeichnet, dass** die Energieversorgung der Elektromagnete (8, 15) durch eine Fahrzeugbatterie sichergestellt ist.

## Claims

1. A seat assembly for a public-transport vehicle, including at least two seats comprising portions forming a backrest and portions forming a seating surface which are articulated onto the portions forming a backrest in order to be capable of being folded back against the latter portions, **characterised in that** said assembly includes at its extremities two lateral edges (2, 3), one (2) of which is articulated (at 4) onto a side wall of the structure of the vehicle in such a manner that it is angularly displaceable between a first position along said wall of the vehicle and a second position in which it extends approximately perpendicular to said wall, and **in that** the other lateral edge (3) of said assembly includes means (5) for locking said assembly in positions, including means forming an electromagnetic suction device (6, 7) comprising an electromagnet (8), the power supply of which is controlled in order to ensure the latching in position of the seat assembly, and associated with means (11) for mechanical locking by stop finger (12), which are induced into the active locking position by elastic means (13) and which are associated with an electromagnet (15), the power supply of which is controlled in order to ensure the retraction of said finger and to enable the displacement of the seat assembly.

2. Seat assembly according to Claim 1, **characterised in that** the locking means include a first part (6), which is borne by the seat assembly, and a second part (7) which is associated with the floor of the vehicle.

3. Seat assembly according to Claim 2, **characterised in that** the second part (7) which is associated with the floor of the vehicle is produced from magnetic material and includes a recess (14) for receiving the stop finger (12) in the active locking position.

4. Seat assembly according to Claim 3, **characterised in that** the power supply of the electromagnets (8, 15) is ensured by a battery of the vehicle.
